# EUROPÄISCHE PATENTANMELDUNG

(11) **EP 4 275 933 A1**
(43) Veröffentlichungstag der Anmeldung: **15.11.2023**
(21) Anmeldenummer: 22172614.4
(22) Anmeldetag: 10.05.2022
(51) Int. Cl.: B60J 5/10, E05D 3/02, E05D 5/02, B60P 3/20, B62D 33/04

(54) **AUFBAU EINES NUTZFAHRZEUGS MIT RÜCKWANDTÜREN**

(71) Anmelder: Schmitz Cargobull AG, 48341 Altenberge (DE)
(72) Erfinder: BEELMANN, Reinhard, 45721 Haltern am See (DE)
(74) Vertreter: Cohausz & Florack

(57) **Zusammenfassung**

Ein Aufbau eines Nutzfahrzeugs mit einem Rückwandrahmen und mit wenigstens einer Rückwandtür, wobei die Rückwandtür über wenigstens ein Scharnier von einer geöffneten Stellung in eine geschlossene Stellung und zurück schwenkbar am Rückwandrahmen gehaltenen ist, wobei das Scharnier ein dem Rückwandrahmen zugeordnetes Rahmenteil und ein der Rückwandtür zugeordnetes und um das Rahmenteil schwenkbares Türteil aufweist und wobei das Türteil des Scharniers einen in der geschlossenen Stellung der Rückwandtür seitlich gegenüber der Rückwandtür vorstehenden und den Rückwandrahmen von der Rückseite des Aufbaus gesehen wenigstens bereichsweise übergreifenden Kragabschnitt aufweist. Um einen hinreichenden Öffnungswinkel der Rückwandtüren und einen möglichst großen Laderaum bereitstellen zu können, ohne genehmigungsrechtlich vorgegebene Maximalabmessungen zu überschreiten, ist vorgesehen, dass der Rückwandrahmen eine Aussparung zur wenigstens teilweisen Aufnahme des Kragabschnitts des Türteils in der geöffneten Stellung und/oder in der geschlossenen Stellung der Rückwandtür aufweist.

## Beschreibung

Die Erfindung betrifft einen Aufbau eines Nutzfahrzeugs, insbesondere Lastkraftwagen, Anhänger oder Sattelauflieger, mit einem Rückwandrahmen und mit wenigstens einer Rückwandtür umfassend eine einem Laderaum zugewandte Innenseite, eine vom Laderaum abgewandte Rückseite und umlaufend zu der Innenseite und der Rückseite vorgesehene Schmalseiten, wobei die Rückwandtür über wenigstens ein Scharnier von einer den Laderaum freigebenden geöffneten Stellung in eine den Laderaum verschließende geschlossene Stellung und zurück schwenkbar am Rückwandrahmen gehalten ist, wobei das Scharnier ein dem Rückwandrahmen zugeordnetes Rahmenteil und ein der Rückwandtür zugeordnetes und um das Rahmenteil schwenkbares Türteil aufweist und wobei das Türteil des Scharniers einen in der geschlossenen Stellung der Rückwandtür seitlich gegenüber der Rückwandtür vorstehenden und den Rückwandrahmen von der Rückseite des Aufbaus gesehen wenigstens bereichsweise übergreifenden Kragabschnitt aufweist.

Nutzfahrzeuge sind in unterschiedlichen Ausgestaltungen, etwa in Form von Lastkraftwagen, Anhängern oder Sattelaufliegern, bekannt. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge ein Chassis, ein mit dem Chassis verbundenes Fahrwerk und einen von dem Chassis getragenen Aufbau auf, welcher einen Laderaum bereitstellt für die Aufnahme der zu transportierenden Ladung. So sind beispielsweise Planenaufbauten bekannt, die wenigstens eine Plane zum Verschließen wenigstens einer Seite und/oder eines Dachs des Planenaufbaus aufweisen. Wenn eine Plane entlang einer Seitenwand verschoben werden kann, spricht man auch von sogenannten Curtainsidern.

Im Gegensatz dazu sind bei sogenannten Kofferaufbauten die Seitenwände und das Dach durch feste Wände verschlossen. Zudem ist rückwärtig wie auch bei den meisten Planenaufbauten ein Rückwandrahmen vorgesehen, an dem zwei Türen in Form von Rückwandtüren gehalten und in dem in der geschlossenen Stellung der Rückwandtüren die Rückwandtüren aufgenommen sind. Gegenüber von dem Rückwandrahmen ist eine Stirnwand vorgesehen. Bei Kofferaufbauten sind die Seitenwände, das Dach, die Stirnwand und die Rückwandtüren regelmäßig aus Seitenwandpaneelen, einem Dachpaneel, einem Stirnwandpaneel und Türpaneelen gebildet. Jedes dieser Paneele weist dabei bedarfsweise zwei strukturgebende Decklagen auf, zwischen denen eine Kernlage aus einem extrudierten oder geschäumten Kunststoff vorgesehen ist. Die entsprechenden Decklagen sind entweder der Umgebung des Kofferaufbaus oder dem Laderaum zugeordnet. Die Decklagen weisen also vereinfacht gesprochen nach innen oder nach außen. Jede Decklage kann dabei bedarfsweise mehrlagig ausgebildet sein und dient der Aussteifung der Paneele. Die Decklagen weisen daher meist wenigstens eine Schicht aus einem Metall und/oder einem faserverstärkten Kunststoff auf.

Die Rückwandtüren können gegenüber dem Rückwandrahmen aus einer geschlossenen Stellung, in der die Rückwandtüren den Rückwandrahmen verschließen, in eine den Rückwandrahmen zum Be- und/oder Entladen des Kofferaufbaus durch den Rückwandrahmen freigebende, geöffnete Stellung verstellt werden. Hierzu sind die Rückwandtüren über Scharniere an seitlichen Vertikalholmen des Rückwandrahmens schwenkbar gehalten. Man bezeichnet die Rückwandtüren daher auch als Flügeltüren. An dem oberen Querholm und dem unteren Querholm des Rückwandrahmens sind Aufnahmen vorgesehen, in die an den Rückwandtüren festgelegte Verriegelungsstangen formschlüssig eingreifen können, um die Rückwandtüren in der geschlossenen Stellung zu verriegeln und so einen Zugang zum Laderaum für unbefugte Personen zu verhindern. Die Verriegelungsstangen oder die Rückwandtüren lassen sich zu diesem Zweck abschließen bzw. mit einem Schloss sichern.

Um den Laderaum von Kofferaufbauten temperieren, insbesondere kühlen, zu können, sind an den Stirnwänden bedarfsweise sogenannte Transportkältemaschinen aufgehängt, die Kühlluft erzeugen und über einen Kanal in den Laderaum des Kofferaufbaus hineinblasen. Parallel dazu saugen die Transportkältemaschinen Luft aus dem Laderaum an, um die Luft abzukühlen und diese erneut als Kühlluft in den Laderaum zu blasen.

Die Rückwandtüren weisen jeweils eine dem Laderaum zugewandte Innensite und eine vom Laderaum abgewandte Rückseite auf. Die Höhe der Innenseite und der Rückseite entspricht wenigstens im Wesentlichen der freien Höhe des Rückwandrahmens. Die Breite der Innenseite und der Rückseite entspricht wenigstens im Wesentlichen der halben freien Breite des Rückwandrahmens. Zwischen der Innenseite und der Rückseite und umlaufend zur Innenseite und zur Rückseite sind meist vier Schmalseiten vorgesehen, deren Breite wenigstens im Wesentlichen der Dicke der Rückwandtüren entspricht. Die Länge der Schmalseiten entspricht dabei wenigstens im Wesentlichen der Höhe oder der Breite der zugehörigen Rückwandtür, je nachdem ob die Schmalseite oben, unten oder seitlich an der Rückwandtür vorgesehen ist.

Die Rückwandtüren und der Rückwandrahmen sind so über Scharniere miteinander verbunden, dass die Rückwandtüren mit Hilfe der Scharniere von der geöffneten Stellung in die geschlossene Stellung und zurück geschwenkt werden können. Die Scharniere weisen dazu ein dem Rückwandrahmen zugeordnetes und mit dem Rückwandrahmen verbundenes Rahmenteil sowie ein der Rückwandtür zugeordnetes und mit der Rückwandtür verbundenes Türteil auf, das um eine Schwenkachse gegenüber dem Rahmenteil geschwenkt werden kann. Die Schwenkachse ist dabei regelmäßig so in Bezug auf den Rückwandrahmen und die Rückwandtür positioniert, dass die Rückwandtür bis an die Außenseite der zugehörigen Seitenwand des Aufbaus herangeschwenkt werden kann.

Die Rückwandtür und die Seitenwand sind dann bedarfsweise etwa parallel zueinander angeordnet, wobei regelmäßig aber ein geringer Winkel zwischen der vollständig geöffneten Rückwandtür und der Seitenwand verbleibt, was aber in der Praxis toleriert werden kann. Die Rückwandtüren öffnen mithin meist nicht um ganze 270°, sondern beispielsweise eher um ungefähr 260°. Auf diese Weise kann aber trotzdem meist sichergestellt werden, dass die Rückwandtüren weder beim Be- und/oder Entladen noch beim Zurückfahren an eine Laderampe heran oder dergleichen im Weg sind. Auch sind die Rückwandtüren dann deutlich geringer durch Windböen hervorgerufenen Kräften ausgesetzt, die andernfalls zu einer Beschädigung des Aufbaus führen könnten.

Um ein entsprechend weites Öffnen der Rückwandtüren zu ermöglichen, ragt das Türteil des Scharniers in der geschlossenen Stellung der Rückwandtür mit einem Kragabschnitt von der Rückseite des Aufbaus gesehen seitlich gegenüber der Rückwandtür vor. Der Kragabschnitt übergreift den Rückwandrahmen wenigstens bereichsweise, wobei das Übergreifen des Rückwandrahmens durch den Kragabschnitt des Türteils als ein Hintergreifen des Rückwandrahmens angesehen werden kann. Der Kragabschnitt erstreckt sich dann nicht nur seitlich in den Bereich des Rückwandrahmens hinein, sondern ist auch hinter dem Rückwandrahmen angeordnet. Zudem werden die Schwenkachsen der Scharniere meist in einigem Abstand zum Rückwandrahmen hinter dem Rückwandrahmen positioniert. Dann können die Rückwandtüren um den Rückwandrahmen nach außen herumgeschwenkt werden. Alternativ oder zusätzlich können die Schwenkachsen aber auch von hinten gesehen seitlich neben dem Rückwandrahmen positioniert werden, um ein weites Aufschwenken der Rückwandtüren zu begünstigen.

Da die Abmessungen der Aufbauten und der Nutzfahrzeuge insgesamt genehmigungsrechtlichen Bestimmungen hinsichtlich der maximalen Abmessungen genügen müssen und eine möglichst kompakte und platzsparende Ausgestaltung der Aufbauten gewünscht ist, etwa um den durch den Aufbau bereitgestellten Laderaum möglichst groß ausbilden zu können, werden die Formen der Scharniere und die Positionen der Schwenkachsen immer wieder etwa modifiziert und hinsichtlich der angesprochenen Vorgaben optimiert. Es besteht aber wegen der gegenläufigen Anforderungen grundsätzlich ein weiterer Verbesserungsbedarf.

Daher liegt der vorliegenden Erfindung die Aufgabe zugrunde, den Aufbau der eingangs genannten und zuvor näher erläuterten Art derart auszugestalten und weiterzubilden, dass ein hinreichender Öffnungswinkel der Rückwandtüren und ein möglichst großer Laderaum bereitgestellt werden kann, ohne genehmigungsrechtlich vorgegebene Maximalabmessungen zu überschreiten.

Diese Aufgabe ist bei einem Aufbau nach dem Oberbegriff von Anspruch 1 dadurch gelöst, dass der Rückwandrahmen eine Aussparung zur wenigstens teilweisen Aufnahme des Kragabschnitts des Türteils in der geöffneten Stellung und/oder in der geschlossenen Stellung der Rückwandtür aufweist.

Durch die Aussparung zur wenigstens teilweisen Aufnahme des Türteils bei vollständig geöffneter Rückwandtür und/oder bei geschlossener Rückwandtür kann die Schwenkachse des wenigstens einen Scharniers näher an dem hinteren Ende des Rückwandrahmens positioniert werden, ohne dass dadurch nennenswerte Einbußen beim Öffnungswinkel der Rückwandtür in Kauf genommen werden müssten. Der Aufbau wird also möglicherweise weniger lang und damit kompakter oder der Laderaum kann geringfügig länger ausgebildet werden, ohne dass die Gesamtlänge des Aufbaus bzw. des Nutzfahrzeugs insgesamt die genehmigungsrechtlichen Maximalabmessung übersteigt. Ferner ist der Rückwandrahmen trotz der Aussparung hinreichend stabil, um etwa Verwindungskräfte des Aufbaus aufnehmen zu können.

Das Scharnier der Rückwandtür soll erlauben, die Rückwandtür vollständig zu schließen und die Rückwandtür vollständig zu öffnen. Dabei werden aber teilweise gegenläufige Anforderungen an das Scharnier gestellt. Je nach der Ausgestaltung des Scharniers kann es mithin problematisch sein, ein vollständiges Öffnen oder ein vollständiges Schließen zu ermöglichen. Diesem Umstand kann erfindungsgemäß durch eine Aussparung Rechnung getragen werden, die entweder das vollständige Öffnen oder das vollständige Schließen der Rückwandtür unterstützt. Zudem kann bedarfsweise auch das vollständige Öffnen und das vollständige Schließen durch eine oder mehrere Aussparungen unterstützt werden. Im Falle von mehreren Aussparungen können diese dann grundsätzlich jeweils kleiner ausgebildet werden, als wenn nur eine Aussparung vorgesehen wäre.

Bei einer ersten besonders bevorzugten Ausgestaltung des Aufbaus ist die Aussparung wenigstens im Wesentlichen an der einer Seitenwand des Aufbaus zugeordneten Außenseite des Rückwandrahmens und/oder an der Außenseite der Seitenwand vorgesehen. Durch die Anordnung der Aussparung an einer Seitenwand des Aufbaus und/oder durch die Anordnung der Aussparung an der Außenseite des Rückwandrahmens kann das vollständige Öffnen der Rückwandtür vereinfacht werden. Insbesondere kann so das Scharnier einfach und zuverlässig ausgebildet werden. Letztlich lässt sich so auch die Schwenkachse des Scharniers und damit der Rückwandtür günstig weit außen und nahe am Rückwandrahmen positionieren. Besonders einfach und stabil ist es, wenn die Aussparung von einem Aussparungsabschnitt gebildet ist. Der Rückwandrahmen und/oder die Seitenwand kann somit durch den Aussparungsabschnitt hinreichend ausgesteift werden. Dies ist insbesondere dann der Fall, wenn der Aussparungsabschnitt einstückig mit dem Rahmenteil verbunden und/oder von dem Rahmenteil gebildet wird.

Alternativ oder zusätzlich kann die Aussparung wenigstens im Wesentlichen an der dem Laderaum zugeordneten Innenseite des Rückwandrahmens und/oder an der Innenseite der Seitenwand vorgesehen sein. Durch die Anordnung der Aussparung an einer Innenseite des Rückwandrahmens oder der Seitenwand des Aufbaus kann das vollständige Schließen der Rückwandtür vereinfacht werden. Insbesondere kann so das Scharnier einfach und zuverlässig ausgebildet werden. Letztlich lässt sich so auch die Schwenkachse des Scharniers und damit der Rückwandtür günstig weit außen und nahe am Rückwandrahmen positionieren. Besonders einfach und stabil ist es auch in diesem Fall, wenn die Aussparung von einem Aussparungsabschnitt gebildet ist. Der Rückwandrahmen und/oder die Seitenwand kann somit durch den Aussparungsabschnitt hinreichend ausgesteift werden. Dies ist insbesondere dann der Fall, wenn der Aussparungsabschnitt einstückig mit dem Rahmenteil verbunden und/oder von dem Rahmenteil gebildet wird.

Um den Aufbau konstruktiv nicht zu sehr zu schwächen, gleichfalls aber eine hinreichend große Aussparung bereitstellen zu können, kann die Aussparung, in einer Richtung quer zur zugehörigen Seitenwand gesehen, an unterschiedlichen Stellen unterschiedlich tief ausgebildet sein. Dies gilt in besonderem Maße, wenn die Aussparung an einem der Rückseite des Aufbaus zugeordneten Abschnitt tiefer ist als in einem von der Rückseite des Aufbaus abgewandten Abschnitt. Im Bereich der Rückwand kann das Türteil des Scharniers mithin weiter in die Aussparung eintauchen, wodurch sich die Rückwandtür weiter öffnen lässt.

Einfach und zweckmäßig kann die Aussparung wenigstens im Wesentlichen durch eine Abschrägung im Rückwandrahmen und/oder in der zugehörigen Seitenwand ausgebildet werden. Dadurch werden auch Spannungsspitzen im Bereich der Aussparung vermieden, wenn der Aufbau beispielsweise Verwindungskräften ausgesetzt ist. Wenn die Aussparung im Wesentlichen keilförmig ausgebildet ist, kann das korrespondierende Türteil zweckmäßig aufgenommen werden, ohne den Aufbau durch die Aussparung zu schwächen.

Um ein stabiles und zuverlässiges Scharnier bereitzustellen, kann das Rahmenteil eine nach oben und unten jeweils durch ein Aufnahmeelement begrenzte Scharnieraufnahme aufweisen. In diese Scharnieraufnahme kann dann ein Scharniernocken des Türteils aufgenommenen werden. Der Scharniernocken kann dann formschlüssig nach oben und nach unten durch die Aufnahmeelemente gehalten werden.

Um ein leichtes und zuverlässiges Schwenken des Scharniers und damit der Rückwandtür sicherzustellen, kann es sich zudem anbieten, wenn sich von einem Aufnahmeelement zum anderen Aufnahmeelement ein Scharnierbolzen erstreckt, der dazwischen die Scharnieraufnahme und den Schnarniernocken durchgreift. Der Scharniernocken kann dann um den Scharnierbolzen geschwenkt werden, der eine entsprechende Schwenkachse bereitstellt. Konstruktiv und hinsichtlich der Montage ist es zudem besonders einfach, wenn der Scharnierbolzen auch die beiden Aufnahmeelemente zu beiden Seiten der Scharnieraufnahme durchgreift.

Das Türteil des Scharniers kann wenigstens teilweise zweckmäßig in der Aussparung aufgenommen werden, wenn die Aussparung von der Rückseite des Aufbaus zugänglich ist, wenigstens für den Fall, dass die Rückwandtür vom Rückwandrahmen getrennt worden ist. So wird nahe der Rückseite des Rückwandrahmens eine recht tiefe Aussparung bereitgestellt, in die das Türteil tief eingreifen kann, um die Rückwandtür problemlos weit zu öffnen. Dies gilt zudem insbesondere dann, wenn die Aussparung von der Rückseite des Rückwandrahmens auf der dem Laderaum zugewandten Seite des Scharnierbolzens zugänglich ist. Dies führt zu einer Schwächung des Rückwandrahmens, dem aber durch eine ansonsten recht steife Ausgestaltung des Aufbaus entgegengewirkt werden kann.

Eine platzsparende Lösung, die ein weites Öffnen der Rückwandtür ermöglicht, kann erreicht werden, wenn das Rahmenteil auf der dem Laderaum abgewandten Seite der zugehörigen Seitenwand und/oder des Rückwandrahmens angeordnet ist. Alternativ oder zusätzlich kann es sich aus denselben Gründen anbieten, wenn das Türteil wenigstens abschnittsweise auf der dem Laderaum zugewandten Seite der zugehörigen Seitenwand und/oder des Rückwandrahmens angeordnet ist.

Von der Rückseite des Aufbaus gesehen kann der Scharnierbolzen der Außenseite der zugehörigen Seitenwand und/oder des Rückwandrahmens zugeordnet und dem Laderaum abgewandt angeordnet sein. Auf diese Weise kann die Schwenkachse nach außen verlegt werden, was das weite Öffnen der Rückwandtür unterstützt. Entsprechend weit muss sich dann jedoch das Türteil des Scharniers bis zur Rückwandtür erstrecken. Dies bedingt dann eine entsprechend große Aussparung zur wenigstens hinreichenden Aufnahme des entsprechend geformten Türteils.

Wenn das Türteil des Scharniers in einem Querschnitt senkrecht zur zugehörigen Rückwandtür wenigstens im Wesentlichen L-förmig oder S-förmig ausgebildet ist, kann das Scharnier und insbesondere die Anbindung der Rückwandtür sehr platzsparend ausgebildet werden. Dabei kann insbesondere ein im Querschnitt L-förmiges Türteil zweckmäßig sein, wenn die Aussparung der Außenseite des Rückwandrahmens oder der Seitenwand zugeordnet ist. Wenn die Aussparung der Innenseite des Rückwandrahmens oder der Seitenwand zugeordnet ist, kann sich dagegen besonders ein im Querschnitt S-förmiges Türteil als zweckmäßig erweisen. Zudem ist es nicht nur einfacher, sondern ebenfalls platzsparender, wenn das Scharnier ein Eingelenk-Scharnier, mithin kein Mehrgelenk-Scharnier mit mehreren Schwenkachsen ist.

Platzsparend ist es ferner, wenn das Türteil an der dem Rückwandrahmen zugewandten Schmalseite der Rückwandtür festgelegt ist. Auf diese Weise kann auch die Aussparung kleiner ausfallen, um einen hinreichenden Anteil des Türteils bei vollständig geöffneter Rückwandtür aufzunehmen. Dies kann konstruktiv zweckmäßig erfolgen, wenn das Türteil mit einem von dem Kragabschnitt separaten Montageabschnitt an der dem Rückwandrahmen zugewandten Schmalseite der Rückwandtür festgelegt ist. Das Türteil muss dann nicht abschnittsweise über die Rückseite hinüberragen. Dieser Abschnitt des Türteils würde nämlich das vollständige Öffnen der Rückwandtür behindern oder einschränken.

Einfach und stabil lassen sich die Rückwandtür und das Scharnier fügen, wenn der Montageabschnitt mit der Schmalseite der zugehörigen Rückwandtür verschraubt ist. Dabei bietet es sich aus den genannten Gründen besonders an, wenn sich die Schrauben wenigstens im Wesentlichen parallel zur zugehörigen Rückwandtür erstrecken. So können hohe Kräfte aufgenommen werden, ohne dass eine platzraubende Verbindung zwischen dem Scharnier und der Rückwandtür bereitgestellt werden muss.

Die zuvor beschriebenen Vorteile des Aufbaus können besonders gewinnbringend genutzt werden, wenn der Aufbau ein Kofferaufbau, insbesondere ein Kühlkofferaufbau, ist. Entsprechende Aufbauten weisen feste Seitenwände auf, die ein völliges Öffnen der Rückwandtür in besonderem Maße beeinträchtigen können. Wenn es sich bei dem Kofferaufbau um einen Kühlkofferaufbau handelt, kann die erfindungsgemäß ermöglichte, größere Kompaktheit des Aufbaus im Bereich des Rückwandrahmens für dickere Rückwandtüren mit einer dickeren Kernschicht aus einem isolierenden, insbesondere extrudierten und/oder geschäumten, Kunststoff genutzt werden.

Der Kofferaufbau weist dabei grundsätzlich feste Seitenwände, ein festes Dach und feste Rückwandtüren auf, wobei die Seitenwände jeweils ein Seitenwandpaneel, das Dach ein Dachpaneel und die Rückwandtüren jeweils ein Türpaneel umfassen, wobei die Seitenwandpaneele, das Dachpaneel und die Türpaneele eine strukturgebende, einem Laderaum des Kühlkofferaufbaus zugeordnete innere Decklage, eine strukturgebende, der Umgebung des Kühlkofferaufbaus zugeordnete äußere Decklage und eine zwischen der inneren Decklage und der äußeren Decklage angeordnete Kernlage aus einem, insbesondere geschäumten und/oder extrudierten, Kunststoff aufweisen. Dies führt auch zu einer zusätzlichen Aussteifung des Aufbaus, was der strukturellen Schwächung durch die Aussparungen entgegenwirken kann.

Nachfolgend wird die Erfindung anhand einer lediglich ein Ausführungsbeispiel darstellenden Zeichnung näher erläutert. In der Zeichnung zeigt
- Fig. 1: ein von einer Zugmaschine gezogenes Nutzfahrzeug mit einem erfindungsgemäßen Aufbau in einer perspektivischen Darstellung,
- Fig. 2: eine Draufsicht auf die Rückwand des Aufbaus aus Fig. 1,
- Fig. 3A-B: ein Detail der Rückwand aus Fig. 2 im Bereich eines Scharniers in einer perspektivischen Ansicht und einer Schnittansicht parallel zum Ladeboden des Aufbaus,
- Fig. 4A-B: das Detail aus Fig. 3 mit teilweise geöffneter Rückwandtür in den entsprechenden Ansichten
- Fig. 5A-B: das Detail aus Fig. 3 mit vollständig geöffneter Rückwandtür in den entsprechenden Ansichten,
- Fig. 6A-B: ein Detail einer Rückwand eines anderen erfindungsgemäßen Aufbaus im Bereich eines Scharniers in einer perspektivischen Ansicht und einer Schnittansicht parallel zum Ladeboden des Aufbaus analog zu den Fig. 3A-B und
- Fig. 7: das Detail aus Fig. 6 mit vollständig geöffneter Rückwandtür in einer Schnittansicht analog zu Fig. 5B.

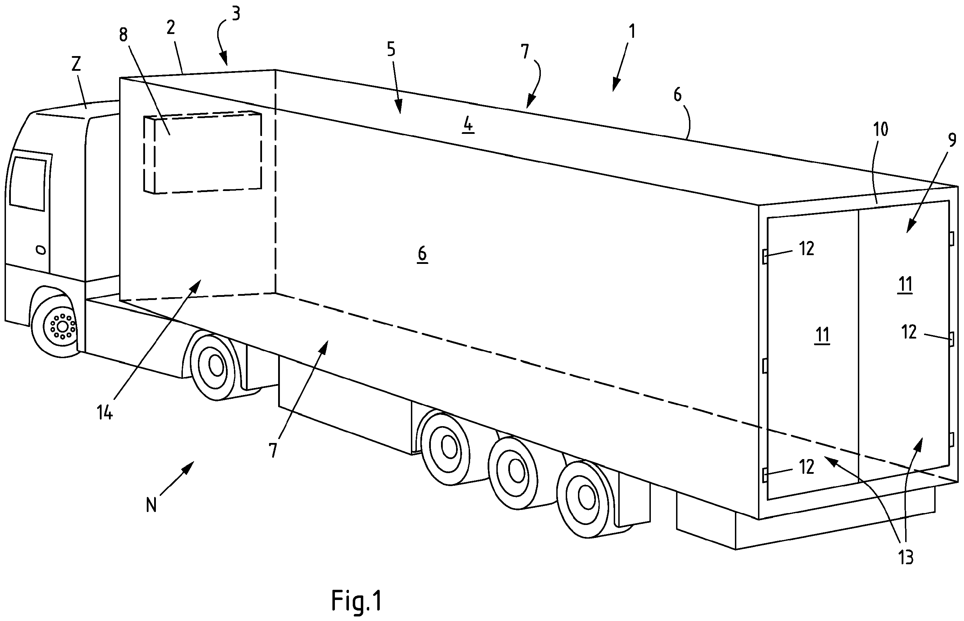

In der Fig. 1 ist ein von einem Nutzfahrzeug N in Form eines Sattelaufliegers getragener und von einer Zugmaschine Z gezogener Aufbau 1 in Form eines Kühlkofferaufbaus dargestellt. Der Kühlkofferaufbau 1 umfasst eine Stirnwand 2 aus einem Stirnwandpaneel 3, ein Dach 4 aus einem Dachpaneel 5 und Seitenwände 6 aus jeweils einem Seitenwandpaneel 7. An der Stirnwand ist eine Transportkältemaschine 8 zum Kühlen des Aufbaus mittels Kühlluft vorgesehen. An der Rückseite des Kühlkofferaufbaus 1 ist eine Rückwand 9 mit einem Rückwandrahmen 10 vorgesehen, in dem zwei Rückwandtüren 11 über Scharniere 12 schwenkbar gehalten sind, die ebenfalls durch ein Türpaneel 13 gebildet werden. Die Rückwandtüren 11 können aus einer in dem Rückwandrahmen 10 vorgesehenen, einen Laderaum 14 des Aufbaus 1 verschließenden geschlossenen Stellung in eine den Laderaum 14 für das Be- und Entladen durch den Rückwandrahmen 10 freigebende geöffnete Stellung und zurück verstellt werden.

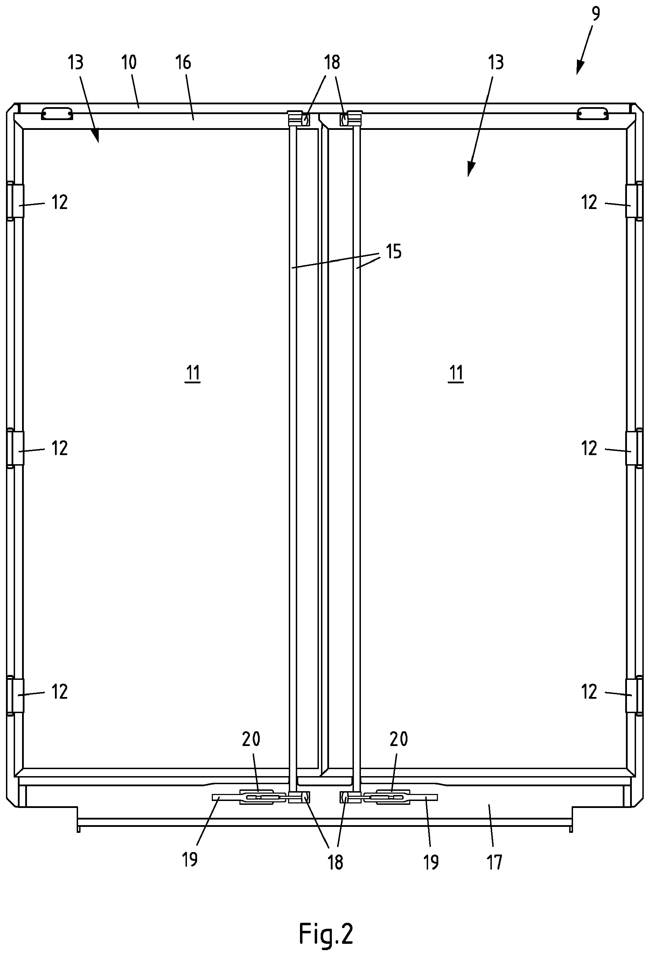

Wie insbesondere in der Fig. 2 dargestellt ist, weisen die Rückwandtüren 11 jeweils eine Verriegelungsstange 15 auf, mit der die entsprechende Rückwandtür 11 formschlüssig an dem Rückwandrahmen 10 gehalten werden kann. Die Rückwandtüren 11 können so in der geschlossenen Stellung verriegelt und gegenüber einem versehentlichen und/oder unbefugten Öffnen gesichert werden. Auch wenn in der Fig. 2 jeder Rückwandtür 11 eine einzige Verriegelungsstange 15 zugeordnet ist, könnten grundsätzlich auch mehrere Verriegelungsstangen 15 einer Rückwandtür 11 zugeordnet sein. Dies ist jedoch mit einem zusätzlichen konstruktiven Aufwand verbunden.

Zum Festlegen der Verriegelungsstangen 15 und damit auch der Rückwandtüren 11 selbst am Rückwandrahmen 10 in der geschlossenen Stellung ist jeder Verriegelungsstange 15 zugeordnet an dem oberen Querholm 16 und dem unteren Querholm 17 des Rückwandrahmens 10 eine Aufnahme 18 zum formschlüssigen Hintergreifen durch die jeweilige Verriegelungsstange 15 vorgesehen. In dem entsprechend formschlüssig in den Aufnahmen 18 gehaltenen Zustand der Verriegelungsstangen 15, können diese nicht mitsamt der Rückwandtür 11 in eine geöffnete Stellung verstellt werden. Hierzu müssen die Verriegelungsstangen 15 zunächst mit Hilfe von unterhalb der Rückwandtüren 11 vorgesehenen Handgriffen 19 um die Längsachse der Verriegelungsstangen 15 gedreht werden. Um die Rückwandtüren 11 nach dem Schließen derselben wieder zu verriegeln, werden die Verriegelungsstangen 15 wieder in der Gegenrichtung gedreht, so dass die Verriegelungsstangen 15 wieder formschlüssig hinter die korrespondierenden Aufnahmen 18 an dem oberen Querholm 16 und dem unteren Querholm 17 gelangen. Die Handgriffe 19 können sodann an Griffhalterungen 20 gehalten und/oder festgelegt werden.

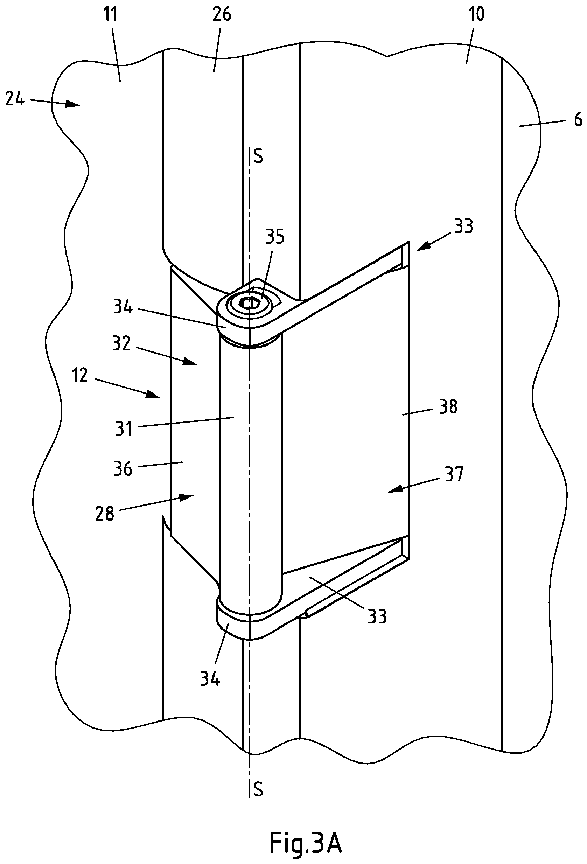

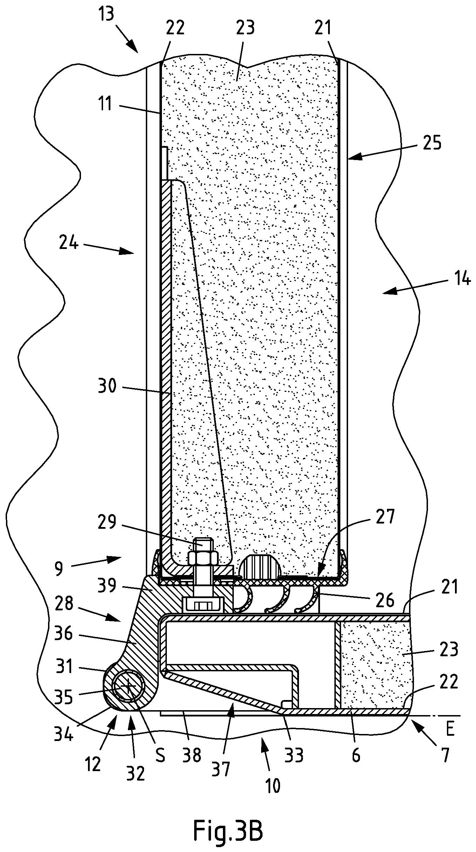

In den Fig. 3A-B ist ein Detail des Aufbaus 1 im Bereich eines Scharniers 12 in unterschiedlichen Ansichten dargestellt. Das Scharnier 12 verbindet eine Seitenwand 6 mit einer Rückwandtür 11. Die Seitenwand 6 weist ebenso wie die Rückwandtür 11 eine zum Laderaum 14 weisende innere Decklage 21 und eine zur Umgebung des Aufbaus 1 weisende äußere Decklage 22 auf. Zwischen der inneren Decklage 21 und der äußeren Decklage 22 sind jeweils Kernlagen 23 aus einem geschäumten Kunststoff vorgesehen. Bezogen auf die Rückwandtür 11 bildet im Wesentlichen die äußere Decklage 22 die Rückseite 24 der Rückwandtür 11, während die innere Decklage 21 der Rückwandtür 11 im Wesentlichen die Innenseite 25 der Rückwandtür 11 bildet. In der geschlossenen Stellung der Rückwandtür 11 wird der Verbindungsbereich zwischen der Rückwandtür 11 und der zugehörigen Seitenwand 6 durch ein Dichtelement 26 abgedichtet, so dass keine warme Luft in den Laderaum 14 eindringen und/oder keine kalte Luft aus dem Laderaum 14 entweichen kann.

Die Rückseite 24 und die Innenseite 25 der Rückwandtür 11 sind über vier umlaufende Schmalseiten 27 voneinander getrennt. An der der Seitenwand 6 zugeordneten Schmalseite 27 ist ein Türteil 28 des Scharniers 12 mit Schrauben 29 an der Rückwandtür 11 festgelegt. Die Schrauben 29 sind dabei von der entsprechenden Schmalseite 27 gefügt und mit einem Aussteifungsprofil 30 in der Rückwandtür 11 verbunden. Die Schrauben 29 erstrecken sich wenigstens im Wesentlichen parallel zur Rückwandtür 11. Das Türteil 28 des Scharniers 12 greift mit einem Scharniernocken 31 in eine Scharnieraufnahme 32 eines Rahmenteils 33 des Scharniers 12 ein. Die Scharnieraufnahme 32 wird dabei oben und unten durch ein vorstehendes Aufnahmeelement 34 begrenzt, wobei durch die Aufnahmeelemente 34, die Scharnieraufnahme 32 und den Scharniernocken 31 ein Scharnierbolzen 35 hindurchgeführt ist. Das Türteil 28 des Scharniers 12 kann mithin mitsamt der Rückwandtür 11 um eine durch den Scharnierbolzen 35 bereitgestellte Schwenkachse S gegenüber dem Rahmenteil 33 des Scharniers 12 und der zugehörigen Seitenwand 6 geschwenkt werden. So lässt sich die Rückwand 11 von einer den Rückwandrahmen 10 verschließenden geschlossenen Stellung in eine den Rückwandrahmen 10 zum Be- und Entladen das Laderaums 14 durch den Rückwandrahmen 10 freigebende geöffnete Stellung und zurück verstellen.

Dabei umfasst das Türteil 28 des Scharniers 12 einen Kragabschnitt 36, mit dem das Türteil 28 des Scharniers 12, wenn sich die Rückwandtür 11 in der geschlossenen Stellung befindet, gegenüber der Rückwandtür 11 vorsteht und von der Rückseite des Aufbaus 1 gesehen den Rückwandrahmen 10 teilweise übergreift. Dagegen weist der Rückwandrahmen 10, bei dem dargestellten und insoweit bevorzugten Aufbau 1, genauer gesagt das Rahmenteil 33 des Scharniers 12, eine seitliche Aussparung 37 auf. Diese dient zur wenigstens teilweisen Aufnahme des Kragabschnitts 36 des Türteils 28 in der geöffneten Stellung der Rückwandtür 11. Die Aussparung 37 ist im hinteren Bereich tiefer ausgebildet als weiter vorne, wobei die Aussparung 37 bei dem dargestellten und insoweit bevorzugten Aufbau 1 als keilförmige Abschrägung vorgesehen ist. Zudem wird die Aussparung 37 bei dem dargestellten und insoweit bevorzugten Aufbau 1 von einem einstückigen Aussparungsabschnitt 38 des Rückwandrahmens 10 gebildet. Im Übrigen ist die Aussparung 37 des Rückwandrahmens 10 sowohl von hinten, und zwar zwischen dem Scharnierbolzen 35 und dem auf der Innenseite des Scharnierbolzens 35 vorgesehenen Teil des Rückwandrahmens 10, als auch von außen zugänglich.

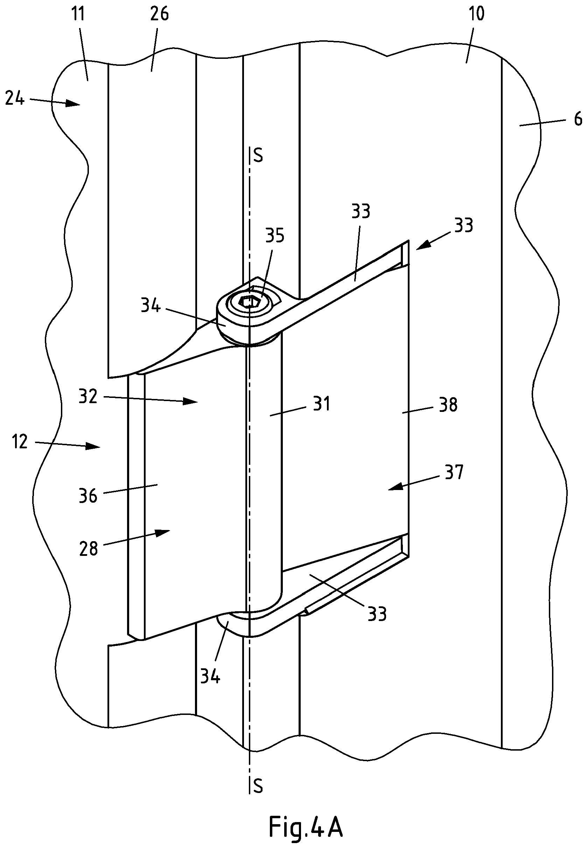

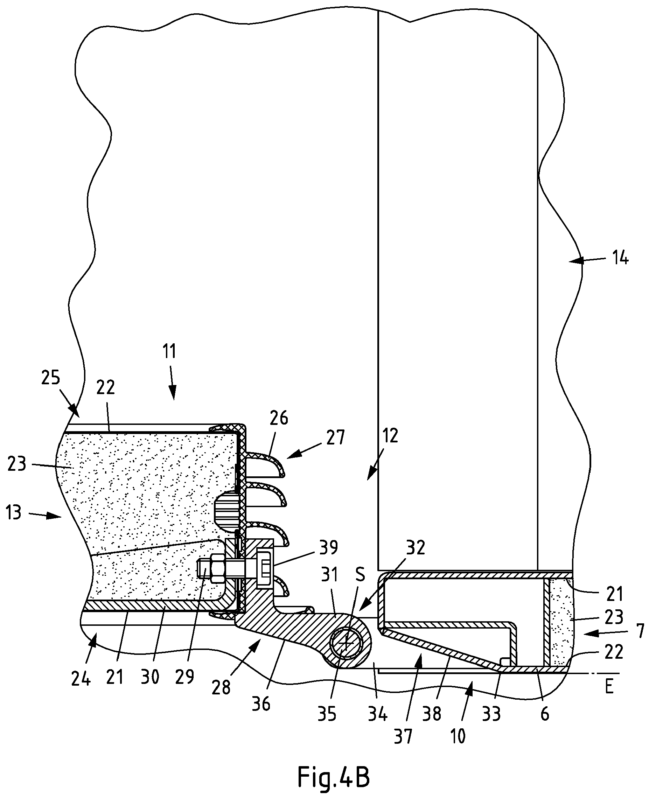

In den Fig. 4A-B ist die Rückwandtür 11 teilweise geöffnet. Ansonsten entsprechend die Fig. 4A-B jedoch den Fig. 3A-B, in denen die Rückwandtür 11 jedoch geschlossen ist. In die entsprechende Stellung ist die Rückwandtür 11 gelangt, indem die Rückwandtür 11 um den Scharnierbolzen 35 um ungefähr 90° geschwenkt worden ist. Das Scharnier 12 ist so ausgebildet, dass der Scharnierbolzen 35 etwa angrenzend zu einer von der Außenseite der zugehörigen Seitenwand 6 definierten Ebene E angeordnet ist. Zudem ist der Scharnierbolzen 35 gegenüber dem Rückwandrahmen 10 unter gedanklicher Weglassung des Rahmenteils 33 des Scharniers 12 nach hinten versetzt. Die Rückwandtür 11 kann daher recht frei um den Scharnierbolzen 35 hin und her schwenken. Insbesondere in der Schnittdarstellung gemäß Fig. 4B ist dargestellt, dass das Türteil 28 des Scharniers 12 im Wesentlichen L-förmig ausgebildet ist. Das Türteil 28 umfasst dabei einen Schenkel in Form eines Montageabschnitts 39, der mit der der zugehörigen Seitenwand 6 zugeordneten Schmalseite 27 der Rückwandtür 11 verbunden ist. Der andere Schenkel wird dabei durch einen Kragabschnitt 36 gebildet, der gegenüber der entsprechenden Schmalseite 27 und gegenüber dem Montageabschnitt 39 nach außen bezogen auf die Rückwandtür 11 vorsteht. In dieser Richtung erstreckt sich der Kragabschnitt 36 bei teilweise geöffneter Stellung der Rückwandtür 11 gemäß den Fig. 4A-B in Richtung der zugehörigen Seitenwand 6 und/oder in Richtung des Rückwandrahmens 10.

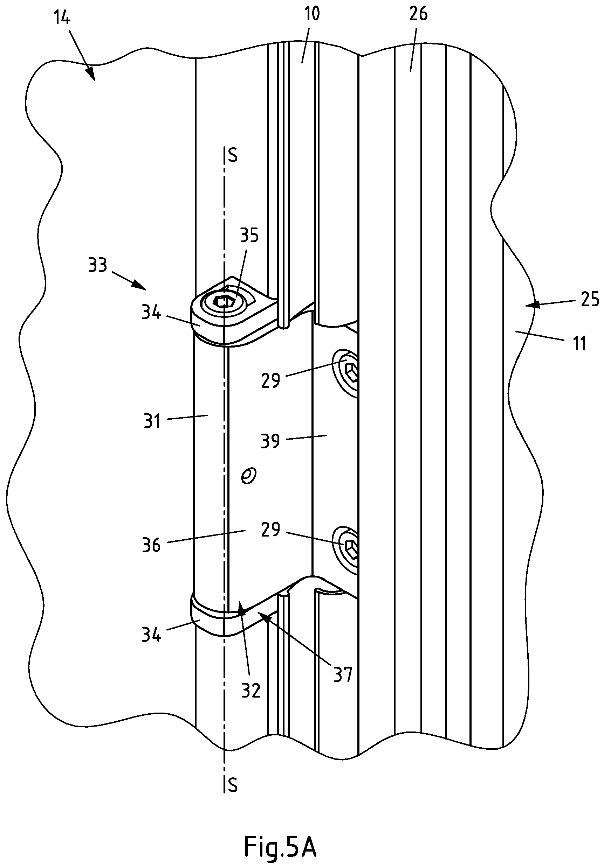

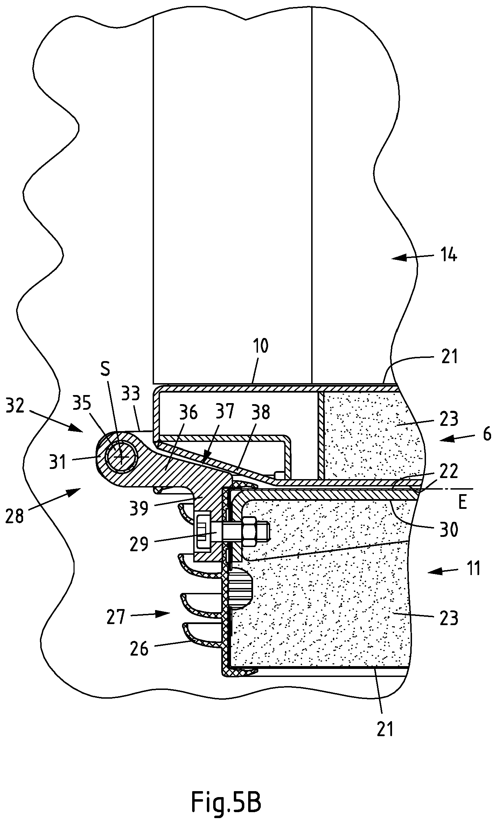

Wird die Rückwandtür 11 ganz um den Scharnierbolzen 35 nach außen geschwenkt, gelangt die Rückwandtür 11 in die in den Fig. 5A-B dargestellte vollständig geöffnete Stellung. Die Rückwandtür 11 ist dann nahe der Seitenwand 6 angeordnet und erstreckt sich wenigstens ungefähr parallel zur angrenzenden Seitenwand. Dieser sehr erhebliche Öffnungswinkel wird dadurch erreicht, dass in der entsprechenden Stellung der Rückwandtür 11 das Türteil 28 des Scharniers 12 teilweise in die Aussparung 37 des Rückwandrahmens 10 eingreifen kann. Zu diesem Zweck sind das Türteil 28 und die Aussparung 37 etwa korrespondierend zueinander ausgebildet. Bei vollständig geöffneter Rückwandtür 11 erstreckt sich das Türteil 28 oder jedenfalls dessen zur Seitenwand 6 weisende Seite in etwa schräg und damit etwa korrespondierend zu der abgeschrägten oder annähernd keilförmigen Aussparung 37.

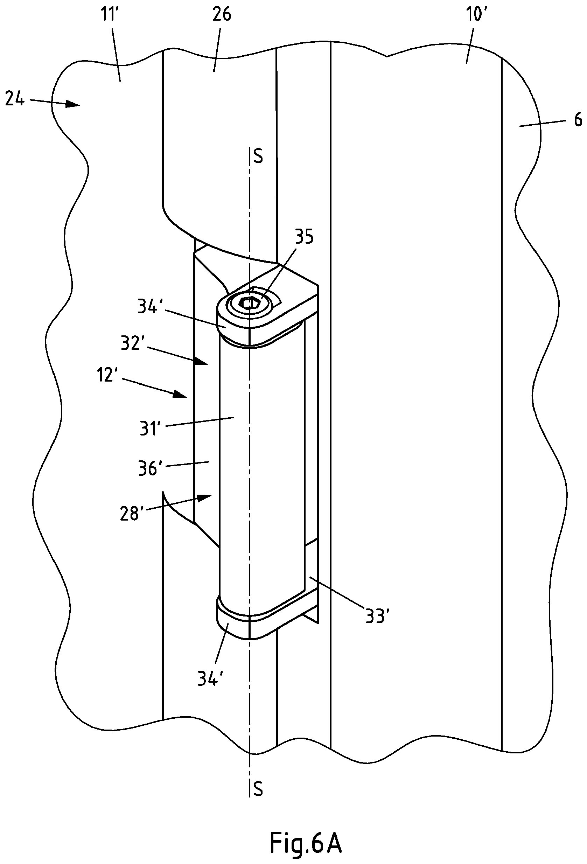

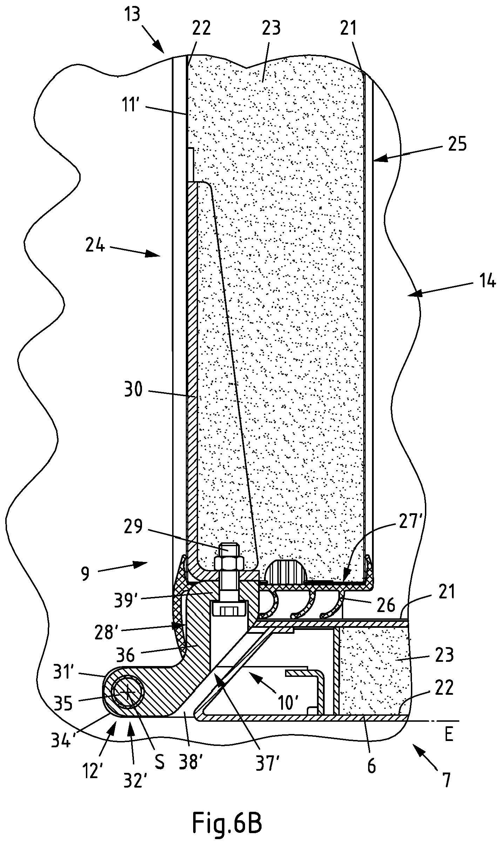

In den Fig. 6A-B ist ein Teil einer Rückwand 9' eines alternativen aber ähnlichen Aufbaus 1' in Ansichten analog zu den Fig. 3A-B dargestellt. Die Rückwandtür 11' befindet sich in der geschlossenen Stellung und ist dabei über Scharniere 12' in einem Rückwandrahmen 10' gehalten, der sich an Seitenwände 6 und ein Dach 4 anschließt. Die Rückwandtür 11', die Seitenwände 6 und das Dach 4 weisen jeweils eine innere Decklage 21 und eine äußere Decklage 22 auf, wobei zwischen der inneren Decklage 21 und der äußeren Decklage 22 eine Kernlage 23 aus einem geschäumten Kunststoff vorgesehen ist. An der dem seitlichen Rückwandrahmen 10' zugeordneten Schmalseite 27' der Rückwandtür 11' ist ein Dichtungselement 26 vorgesehen, um einen konvektiven Wärmetransport durch den Spalt zwischen der Rückwandtür 11' und dem Rückwandrahmen 10' in den Laderaum 14 des Aufbaus 1' hinein zu vermeiden. An der entsprechenden Schmalseite 27 der Rückwandtür 11' ist ein Türteil 28' des Scharniers 12' über ein Montageabschnitt 39' mit der Rückwandtür 11' verbunden. Zum Verbinden der Rückwandtür 11' mit dem Türteil 28' sind Schrauben 29 vorgesehen, die von der Schmalseite 27' gefügt und wenigstens im Wesentlichen parallel zu der Rückwandtür 11' ausgerichtet sind. Um die Kräfte zuverlässig zu übertragen, greifen die Schrauben 29 in ein Aussteifungsprofil 30 ein. Neben dem Montageabschnitt 39' weist das Türteil 28' noch einen Kragabschnitt 36' auf, der seitlich gegenüber der Rückwandtür 11' vorsteht und bei geschlossener Rückwandtür 11' den Rückwandrahmen 10'von hinten gesehen abschnittsweise hintergreift, was auch als ein Übergreifen verstanden werden kann. Dabei ist das Türteil 28' im in der Fig. 6B dargestellten Querschnitt etwa S-förmig oder L-förmig ausgebildet.

Das Türteil 28' ist über einen Scharnierbolzen 35 mit dem korrespondierenden Rahmenteil 33' des Scharniers 12' verbunden. Der Scharnierbolzen 35 ist dabei durch die zu beiden Seiten eines Scharniernockens 31' des Türteils 28' angeordneten und gegenüber dem Rahmenteil 33' vorstehenden Aufnahmeelemente 34' und durch den Scharniernocken 31' geführt. Der Scharniernocken 31' greift dabei in eine zwischen den Aufnahmeelementen 34' gebildete Scharnieraufnahme 32' ein. Damit ist das Türteil 28' um eine durch den Scharnierbolzen 35 definierte Schwenkachse S, die der Längsachse des Scharnierbolzens 35 entspricht, gegenüber dem Rahmenteil 33' des Scharniers 12' schwenkbar.

Damit die Rückwandtür 11' bei der entsprechenden Anordnung des Scharnierbolzens 35 und der Ausgestaltung des Türteils 28' in die dargestellte geschlossene Stellung verstellt werden kann, weist der Rückwandrahmen 10' dem Laderaum 14 zugewandt eine Aussparung 37' auf, in dem der Kragabschnitt 39' des Türteils 28' teilweise aufgenommen ist. Die Aussparung 37' wird dabei von einen Aussparungsabschnitt 38' des Rückwandrahmens 10', insbesondere des Rahmenteils 33' bereitgestellt. Dabei ist die Aussparung 37' von nahezu der gesamten Breite des Rückwandrahmens 10' von hinten zugänglich, und zwar von beiden Seiten des Scharnierbolzens 35, der angrenzend an eine durch die Außenseite des Rückwandrahmens 10' oder der Seitenwand 6 zugeordnet ist. Die Aussparung 37' ist etwa keilförmig und am hinteren Ende des Rückwandrahmens 10' tiefer ausgebildet als die Tiefe der Aussparung 37' weiter vorne.

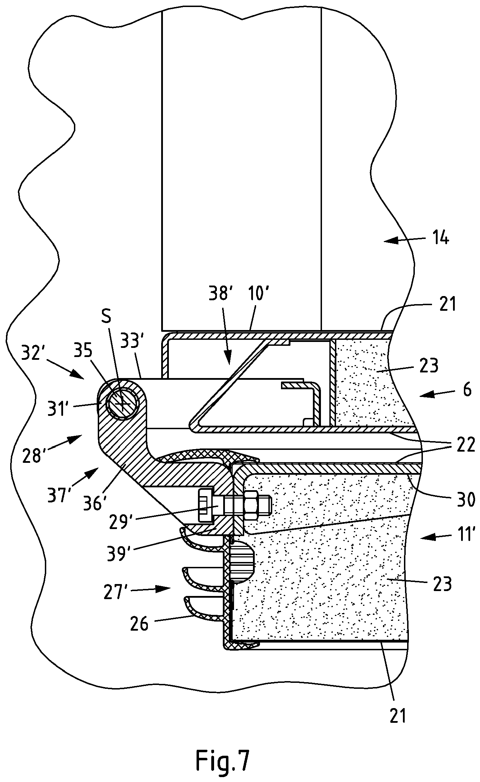

In der Fig. 7 ist die Rückwandtür 11' in der vollständig geöffneten Stellung dargestellt, in der die Rückwandtür 11' wenigstens in etwa parallel zur Seitenwand 6 angeordnet ist und in der die Rückwandtür 11' den Rückwandrahmen 10' zum Be- und Entladen des Laderaums 14 freigibt. Um die vollständig geöffnete Stellung einzunehmen ist die Rückwandtür 11' aus der geschlossenen Stellung der Fig. 6A-B um die zentral zum Scharnierbolzen 35 angeordnete Schwenkachse S nach außen geschwenkt worden. Der Montageabschnitt 39' und ein Großteil des Kragabschnitts 36' ist in der vollständig geöffneten Stellung der Rückwandtür 11' außerhalb der durch die Außenseite der Seitenwand 6 definierten Ebene E angeordnet. Die Aussparung 37' weist als Teil des Rahmenteils 33' weiter in Richtung des Laderaums 14 und ist in Form einer lokalen Abschrägung des Rückwandrahmens 10 an dessen Innenseite ausgebildet.

### Bezugszeichenliste

- 1: Aufbau
- 2: Stirnwand
- 3: Stirnwandpaneel
- 4: Dach
- 5: Dachpaneel
- 6: Seitenwand
- 7: Seitenwandpaneel
- 8: Transportkältemaschine
- 9: Rückwand
- 10: Rückwandrahmen
- 11: Rückwandtür
- 12: Scharnier
- 13: Türpaneel
- 14: Laderaum
- 15: Verriegelungsstange
- 16: oberer Querholm
- 17: unterer Querholm
- 18: Aufnahme
- 19: Handgriff
- 20: Griffhalterungen
- 21: innere Decklage
- 22: äußere Decklage
- 23: Kernlage
- 24: Rückseite
- 25: Innenseite
- 26: Dichtungselement
- 27: Schmalseite
- 28: Türteil
- 29: Schraube
- 30: Aussteifungsprofil
- 31: Scharniernocken
- 32: Scharnieraufnahme
- 33: Rahmenteil
- 34: Aufnahmeelement
- 35: Scharnierbolzen
- 36: Kragabschnitt
- 37: Aussparung
- 38: Aussparungsabschnitt
- 39: Montageabschnitt
- E: Ebene
- N: Nutzfahrzeug
- S: Schwenkachse
- Z: Zugmaschine

## Patentansprüche

1. Aufbau (1,1') eines Nutzfahrzeugs (N), insbesondere Lastkraftwagen, Anhänger oder Sattelauflieger, mit einem Rückwandrahmen (10,10') und mit wenigstens einer Rückwandtür (11,11') umfassend eine einem Laderaum (14) zugewandte Innenseite (25), eine vom Laderaum (14) abgewandte Rückseite (24) und umlaufend zu der Innenseite (25) und der Rückseite (24) vorgesehene Schmalseiten (27,27'), wobei die Rückwandtür (11,11') über wenigstens ein Scharnier (12,12') von einer den Laderaum (14) freigebenden geöffneten Stellung in eine den Laderaum (14) verschließende geschlossene Stellung und zurück schwenkbar am Rückwandrahmen (10,10') gehaltenen ist, wobei das Scharnier (12,12') ein dem Rückwandrahmen (10,10') zugeordnetes Rahmenteil (33,33') und ein der Rückwandtür (11,11') zugeordnetes und um das Rahmenteil (33,33') schwenkbares Türteil (28,28') aufweist und wobei das Türteil (28,28') des Scharniers (12,12') einen in der geschlossenen Stellung der Rückwandtür (11,11') seitlich gegenüber der Rückwandtür (11,11') vorstehenden und den Rückwandrahmen (10,10') von der Rückseite des Aufbaus (1,1') gesehen wenigstens bereichsweise übergreifenden Kragabschnitt (36,36') aufweist, **dadurch gekennzeichnet, dass** der Rückwandrahmen (10,10') eine Aussparung (37,37') zur wenigstens teilweisen Aufnahme des Kragabschnitts (36,36') des Türteils (28,28') in der geöffneten Stellung und/oder in der geschlossenen Stellung der Rückwandtür (11,11') aufweist.

2. Aufbau nach Anspruch 1,
**dadurch gekennzeichnet, dass** die Aussparung (37) wenigstens im Wesentlichen an der einer Seitenwand (6) des Aufbaus (1) zugeordneten Außenseite des Rückwandrahmens (10) und/oder an der Außenseite der Seitenwand (6) vorgesehen ist und/oder dass die Aussparung (37') wenigstens im Wesentlichen an der dem Laderaum (14) zugeordneten Innenseite des Rückwandrahmens (10') und/oder an der Innenseite der Seitenwand (6) vorgesehen ist.

3. Aufbau nach Anspruch 1 oder 2,
**dadurch gekennzeichnet, dass** die Aussparung (37,37') von einem Aussparungsabschnitt (38,38') gebildet ist und dass der Aussparungsabschnitt (38,38') einstückig mit dem Rahmenteil (33,33') verbunden und/oder von dem Rahmenteil (33,33') gebildet wird.

4. Aufbau nach einem der Ansprüche 1 bis 3,
**dadurch gekennzeichnet, dass** die Aussparung (37,37') in einer Richtung quer zur zugehörigen Seitenwand (6) gesehen in einem der Rückseite des Aufbaus (1,1') zugeordneten Abschnitt tiefer ist als in einem von der Rückseite des Aufbaus (1,1') abgewandten Abschnitt.

5. Aufbau nach einem der Ansprüche 1 bis 4,
**dadurch gekennzeichnet, dass** die Aussparung (37,37') wenigstens im Wesentlichen durch eine Abschrägung im Rückwandrahmen (10,10') und/oder in der zugehörigen Seitenwand (6) gebildet wird und/oder dass die Aussparung (37,37') im Wesentlichen keilförmig ausgebildet ist.

6. Aufbau nach einem der Ansprüche 1 bis 5,
**dadurch gekennzeichnet, dass** das Rahmenteil (33,33') eine nach oben und unten jeweils durch ein Aufnahmeelement (34,34') begrenzte Scharnieraufnahme (32,32') aufweist und dass das Türteil (28,28') einen in der Scharnieraufnahme (32,32') aufgenommenen Scharniernocken (31,31') aufweist.

7. Aufbau nach Anspruch 6,
**dadurch gekennzeichnet, dass** ein sich von einem Aufnahmeelement (34,34') zum anderen Aufnahmeelement (34,34') die Scharnieraufnahme (32,32') und den Schnarniernocken (31,31') durchgreifender Scharnierbolzen (35) vorgesehen ist und dass, vorzugsweise, der Scharnierbolzen (35) die Aufnahmeelemente (34,34') durchgreift.

8. Aufbau nach einem der Ansprüche 1 bis 7,
**dadurch gekennzeichnet, dass** die Aussparung (37,37') wenigstens bei vom Rückwandrahmen (10,10') getrennter Rückwandtür (11,11') von der Rückseite des Aufbaus (1,1'), insbesondere auf der dem Laderaum zugewandten Seite des Scharnierbolzens (35), zugänglich ist.

9. Aufbau nach einem der Ansprüche 1 bis 8,
**dadurch gekennzeichnet, dass** das Rahmenteil (33,33') auf der dem Laderaum (14) abgewandten Seite der zugehörigen Seitenwand (6) und/oder des Rückwandrahmens (10,10') angeordnet ist und/oder dass das Türteil (28,28') wenigstens abschnittweise auf der dem Laderaum (14) zugewandten Seite der zugehörigen Seitenwand (6) und/oder des Rückwandrahmens (10,10') angeordnet ist.

10. Aufbau nach einem der Ansprüche 7 bis 9,
**dadurch gekennzeichnet, dass** der Scharnierbolzen (35) von der Rückseite des Aufbaus (1,1') gesehen der Außenseite der zugehörigen Seitenwand (6) zugeordnet und dem Laderaum (14) abgewandt angeordnet ist.

11. Aufbau nach einem der Ansprüche 1 bis 10,
**dadurch gekennzeichnet, dass** das Türteil (28,28') des Scharniers (12,12') in einem Querschnitt senkrecht zur zugehörigen Rückwandtür (11,11') wenigstens im Wesentlichen L-förmig oder S-förmig ausgebildet ist und/oder dass das Scharnier (12,12') ein Eingelenk-Scharnier (12,12') ist.

12. Aufbau nach einem der Ansprüche 1 bis 11,
**dadurch gekennzeichnet, dass** das Türteil (28,28') an der dem Rückwandrahmen (10,10') zugewandten Schmalseite der Rückwandtür (11,11') festgelegt ist und dass, vorzugsweise, das Türteil (28,28') mit einer von dem Kragabschnitt (36,36') separaten Montageabschnitt (39,39') an der dem Rückwandrahmen (10,10') zugewandten Schmalseite der Rückwandtür (11,11') festgelegt ist.

13. Aufbau nach Anspruch 12,
**dadurch gekennzeichnet, dass** der Montageabschnitt (39,39') mit der Schmalseite (27,27') der zugehörigen Rückwandtür (11,11') verschraubt ist und, vorzugsweise, dass sich die Schrauben (29) wenigstens im Wesentlichen parallel zur zugehörigen Rückwandtür (11,11') erstrecken.

14. Aufbau nach einem der Ansprüche 1 bis 13,
**dadurch gekennzeichnet, dass** der Aufbau (1,1') ein Kofferaufbau, insbesondere ein Kühlkofferaufbau, ist.

15. Aufbau nach Anspruch 14,
**dadurch gekennzeichnet, dass** der Aufbau (1,1') feste Seitenwände (6), ein festes Dach (4) und feste Rückwandtüren (11,11') aufweist, wobei die Seitenwände (6) jeweils ein Seitenwandpaneel (7), das Dach (4) ein Dachpaneel (5) und die Rückwandtüren (11,11') jeweils ein Türpaneel (13) umfassen, wobei die Seitenwandpaneele (7), das Dachpaneel (5) und die Türpaneele (13) eine strukturgebende, einem Laderaum (14) des Aufbaus (1,1') zugeordnete innere Decklage (21), eine strukturgebende, der Umgebung des Aufbaus (1,1') zugeordnete äußere Decklage (22) und eine zwischen der inneren Decklage (21) und der äußeren Decklage (22) angeordnete Kernlage (23) aus einem, insbesondere geschäumten und/oder extrudierten, Kunststoff aufweisen.
